# EUROPEAN PATENT SPECIFICATION

(11) **EP 3 386 257 B1**
(45) Date of publication and mention of the grant of the patent: **17.03.2021**
(21) Application number: 16895872.6
(22) Date of filing: 30.03.2016
(51) Int. Cl.: H04W 72/04, H04L 1/18, H04L 5/00, H04L 5/14, H04B 7/26

(54) **RADIO COMMUNICATION METHOD AND EQUIPMENT**
VERFAHREN UND AUSRÜSTUNG ZUR FUNKKOMMUNIKATION
PROCÉDÉ ET ÉQUIPEMENT DE RADIOCOMMUNICATION

(43) Date of publication of application: 10.10.2018
(73) Proprietor: GUANGDONG OPPO MOBILE TELECOMMUNICATIONS CORP., LTD., Wusha, Chang'an Dongguan, Guangdong 523860 (CN)
(72) Inventor: FENG, Bin, Guangdong 523860 (CN)
(74) Representative: Manitz Finsterwald Patent- und Rechtsanwaltspartnerschaft mbB
(86) International application number: PCT/CN2016/077807
(87) International publication number: WO 2017/166091

(56) References cited:
- WO-A1-2007/053954
- WO-A1-2017/099877
- WO-A1-2017/106027
- CN-A- 102 064 879
- CN-A- 103 124 207
- US-A1- 2011 013 613
- NTT DOCOMO ET AL: "5G Vision for 2020 and Beyond", 3GPP DRAFT; RWS-150051 5G VISION DOCOMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. Phoenix, AZ, USA; 20150917 - 20150918 3 September 2015 (2015-09-03), XP051043631, Retrieved from the Internet: URL:http://www.3gpp.org/ftp/Meetings_3GPP_ SYNC/WORKSHOP/Docs/ [retrieved on 2015-09-03]
- QUALCOMM INCORPORATED: "TTI Shortening and Reduced Processing Time for DL Transmissions", 3GPP DRAFT; R1-160905 TTI SHORTENING AND REDUCED PROCESSING TIME FOR DL TRANSMISSIONS, 3RD GENERATION PARTNERSHIP PROJECT (3GPP), MOBILE COMPETENCE CENTRE ; 650, ROUTE DES LUCIOLES ; F-06921 SOPHIA-AN , vol. RAN WG1, no. St. Julian's, Malta; 20160215 - 20160219 14 February 2016 (2016-02-14), XP051054229, Retrieved from the Internet: URL:http://www.3gpp.org/ftp/Meetings_3GPP_ SYNC/RAN1/Docs/ [retrieved on 2016-02-14]

## Description

### TECHNICAL FIELD

Embodiments of the present disclosure relate to the field of wireless communications, and more particularly to a wireless communication method and device.

### BACKGROUND

A Long Term Evolution (LTE) Time Division Duplexing (TDD) system generally has seven kinds of uplink and downlink subframe configurations, as shown in Table 1.

**Table 1- uplink and downlink subframe configurations of the TDD system**

| uplink-downlink subframe configuration | subframe number | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

In Table 1, a duration of each subframe is 1ms, D represents a downlink subframe, U represents an uplink subframe, and S represents a special subframe.

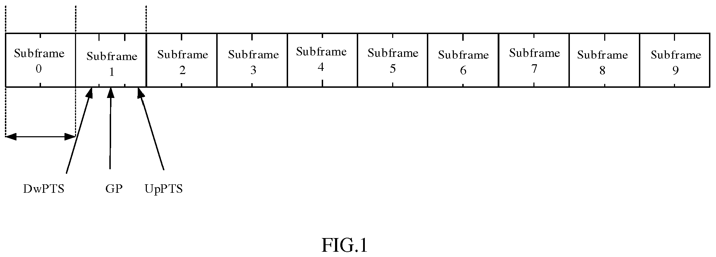

FIG. 1 is a schematic structural diagram of a special subframe. In FIG. 1, subframe 1 is a special subframe, and the special subframe includes a Downlink Pilot Time Slot (DwPTS), a Guard Period (GP), and an Uplink Pilot Time Slot (UpPTS). The DwPTS may transmit downlink data. The GP is a guard period and is used for a switching from an uplink to a downlink. The UpPTS generally includes one or two uplink symbols and may be used to transmit an uplink sounding reference signal (SRS) or an uplink control channel.

It can be seen that an existing subframe internal structure in the TDD system is fixed and types of information transmitted in a subframe is limited, which makes information transmission modes of a communication system limited and cannot to satisfy the requirements of subsequent communication systems (e.g., 5th-Generation Wireless System, abbreviated 5G).

NTT DOCOMO ETAL: "5G vision for 2020 and beyond", 3GPP DRAFT, RWS-150051 discloses a 5G vision for 2020 and beyond.

QUALCOMM INCORPORATED: "TTI shortening and reduced processing time for DL transmissions" 3GPP DRAFT, R1-160905 discloses a TTI shortening and reduced processing time for DL transmissions.

US 2011/013613 A1 discloses a method of performing HARQ in wireless communication system.

WO 2017/099877 A1 discloses delayed control feedback in a time devision duplex carrier utilizing common bursts.

WO 2017/106027 A1 discloses techniques for indicating a dynamic subframe type.

### SUMMARY

The present disclosure provides a wireless communication method and device, in order to solve the problem that information transmission modes of a communication system are limited.

The present invention is defined in appended independent claims.

In a first aspect, a communication method as defined in claim 1 is provided. The method includes:
in a wireless communication system, a communication device communicates with other communication devices via a subframe, said subframe in the wireless communication system includes a bidirectional subframe. Here, the bidirectional subframe includes a downlink control channel, a guard period, an uplink channel, a downlink channel, a guard period, and an uplink control channel in sequence in the time domain direction. Here, the downlink control channel is configured for transmitting downlink control information. The uplink control channel is configured for transmitting uplink control information. The downlink channel is configured for transmitting at least one of downlink data or downlink control information. The uplink channel is configured for transmitting at least one of uplink data or uplink control information.

In a second aspect, a communication device as defined in claim 10 is provided. The communication device may be a base station or a terminal. The communication device includes modules capable of implementing the method in the first aspect.

In a third aspect, a computer readable storage medium as defined in claim 11 is provided. The computer readable storage medium is configured to store program codes executable by a communication device, and the program codes include instructions for implementing the method in the first aspect.

In the present disclosure, the communication system introduces a bidirectional subframe, which increases types of information that can be carried in a subframe, and makes the information transmission modes of the communication system more flexible.

### BRIEF DESCRIPTION OF DRAWINGS

In order to more clearly illustrate the technical solutions of the embodiments of the present disclosure, the drawings used in the embodiments of the present disclosure will be briefly described below. It is apparent that the drawings described below are merely some embodiments of the present disclosure. For those skilled in the art, other drawings may also be obtained based on these drawings without any creative work.
FIG. 1 is a schematic structural diagram of a special subframe.
FIG. 2 is a structure diagram of a basic subframe according to an embodiment of the present disclosure.
FIG. 3 is a timing diagram of Acknowledge (ACK)/Negative Acknowledgment (NACK) feedback according to an embodiment of the present disclosure.
FIG. 4 is a timing diagram of ACK/NACK feedback according to an embodiment of the present disclosure.
FIG. 5 is a timing diagram of ACK/NACK feedback according to an embodiment of the present disclosure.
FIG. 6 is a structure diagram of a transition subframe according to an embodiment of the present disclosure.
FIG. 7 is an exemplary diagram of a manner in which a basis subframe and a transition subframe are combined according to an embodiment of the present disclosure.
FIG. 8 is an exemplary diagram of a manner in which a basis subframe and a transition subframe are combined according to an embodiment of the present disclosure.
FIG. 9 is an exemplary diagram of a manner in which a basis subframe and a transition subframe are combined according to an embodiment of the present disclosure.
FIG. 10 is schematic structural diagram of a communication device according to an embodiment of the present disclosure.
FIG. 11 is a schematic structural diagram of a communication device according to an embodiment of the present disclosure.

### DETAILED DESCRIPTION

It should be understood that the embodiments of the present disclosure can be applied to various communication system, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an Advanced long term evolution (LTE-A) system, an Universal Mobile Telecommunication System (UMTS) system, and a 5G. The following are only examples based on requirements of 5G.

A 5G system is mainly deployed in a high frequency band, so that a coverage range of a cell will be greatly reduced compared to 4G and 3G systems. When a cell range becomes smaller, the number of users per cell will also be reduced, so that the change in the data traffic of the cell may also be faster. In order to better adapt to the rapid change in the data traffic of the cell, a TDD for the 5G system needs the ability to configure uplink and downlink channel resources quickly and flexibly. For the TDD system, the change in uplink and downlink data traffic is adapted to by switching among seven kinds of TDD configurations. Since the existing TDD configurations are defined in units of frames and the existing fastest switching speed in the system is 10ms, it cannot satisfy the requirements of dynamic changes of traffic in the 5G system.

Configurations of uplink and downlink traffic can be achieved more accurately by defining more TDD configurations, but this leads to a problem that timing designs for acknowledgment signals will become more complicated. At present, a transmission acknowledgment signal (Acknowledge (ACK)/Negative Acknowledgment (NACK)) in the LTE system adopts a fixed time sequence, in which for a certain specific configuration, an acknowledgment signal on a certain subframe will be transmitted on a subsequent preset subframe. It is assumed that there are N kinds of TDD configurations in the system. Thus, according to the existing timing design principles of the LTE system, N^{∗}N different timing relationships need to be considered. This is a constraint on the design of a future 5G system.

Therefore, it is urgent to propose a new subframe structure that can more flexibly adapt to changes of the uplink and downlink data traffic compared to the existing seven kinds of configurations.

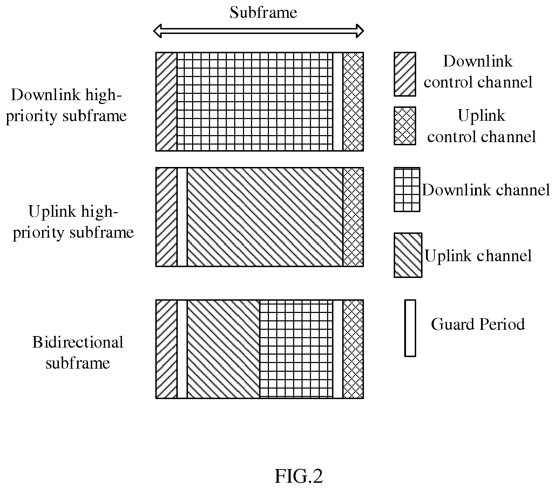

FIG. 2 is a schematic diagram of a subframe structure according to an embodiment of the present disclosure. As can be seen from FIG.2, a subframe in a wireless communication system includes at least one of a downlink high-priority subframe, an uplink high-priority subframe, or a bidirectional subframe. The downlink high-priority subframe includes a downlink control channel, a downlink channel, a guard period, and an uplink control channel in sequence in a time domain direction. The uplink high-priority subframe includes a downlink control channel, a guard period, an uplink channel, and an uplink control channel in sequence in the time domain direction. The bidirectional subframe includes a downlink control channel, a guard period, an uplink channel, a downlink channel, a guard period, and an uplink control channel in sequence in the time domain direction. The downlink control channel is configured for transmitting downlink control information, and the uplink control channel is configured for transmitting uplink control information. The downlink channel is configured for transmitting at least one of downlink data or downlink control information, and the uplink channel is configured for transmitting at least one of uplink data or uplink control information.

It should be understood that a subframe includes a channel means that the subframe includes time domain resources or time-frequency resources corresponding to the channel.

The subframe structure in the embodiments of the present disclosure can adapt to changes of uplink and downlink data traffic more flexibly compared to the existing seven types of configurations.

In some embodiments, in the time domain direction may refer to a direction that increases along the time domain. In some embodiment, in the time domain direction may also refer to a direction that decreases along the time domain.

In some embodiments, the first segment of a subframe in the wireless communication system is a fixed downlink control channel for transmitting downlink control information. In some embodiments, the downlink control channel may also be used to transmit type information of the subframe, after a terminal receives the downlink control channel, the terminal may determine that the subframe is which of the uplink high-priority subframe, the uplink high-priority subframe and the bidirectional subframe according to the type information of the subframe.

In some embodiments, the last segment of the subframe is a fixed uplink control channel for transmitting uplink control information. In some embodiments, the uplink control information may be, for example, a Scheduling Request (SR), a Channel Quality Indicator (CQI), A/N information (i.e., ACK/ NACK information), a Sounding Reference Signal (SRS), and a Primary Random Channel (PRCH).

In the embodiments above, since each subframe is equipped with downlink and uplink control channels, this allows important downlink and uplink control information to be transmitted in each subframe in time.

In some embodiments, ratio information of the uplink and downlink channels of the bidirectional subframe (a ratio of the uplink and downlink channels in time width) may be configured by a base station. In some embodiments, this ratio information may be transmitted in the downlink control channel of the first segment of the subframe.

The existing subframe structure of the LTE TDD system is described above with reference to Table 1 and FIG. 1, if the TDD in the 5G system also adopts the above frame structure configurations, it will cause a more serious delay problem. Specifically, in the existing TDD frame structure, most of the subframes are either uplink subframes or downlink subframes. But for uplink/downlink data transmission, ACK/NACK information needs to be transmitted in other downlink/uplink subframes (corresponding relationships are predetermined). When the ACK/NACK signal cannot be transmitted in time due to the limitation of the TDD structure, the delay occurs. This delay is due to the TDD frame structure configurations themselves in the LTE. The 5G system imposes higher requirements on the delay, and it is expected that the delay at the radio access layer can be reduced to 1ms (1 subframe) or less. If the existing frame structure configurations of the TDD by the LTE system are still used, it is difficult to guarantee the delay requirements of the 5G system. In order to solve the delay problem caused by the TDD configurations, the embodiments of the present disclosure further introduces a timing of ACK/NACK feedback for the uplink/downlink data in these subframes based on the introductions of the uplink high-priority subframe, the downlink high-priority subframe, and the bidirectional subframe.

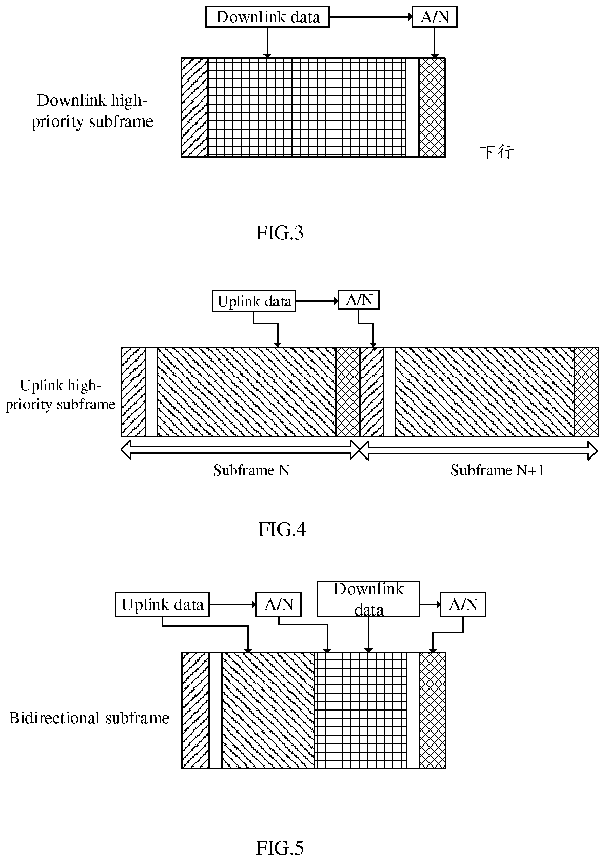

In an embodiment, the uplink control channel of the downlink high-priority subframe is configured for transmitting ACK/NACK information for downlink data in the downlink channel of the downlink high-priority subframe, as shown in FIG. 3.

The embodiment of the present disclosure provides a simple transmission timing of an A/N signal, which can reduce the delay of the TDD system due to transmission of the A/N signal.

In an embodiment, the downlink control channel of the uplink high-priority subframe is configured for transmitting ACK/NACK information for uplink data in a previous subframe of the uplink high-priority subframe, as shown in FIG. 4.

The embodiment of the present disclosure provides a simple transmission timing of an A/N signal, which can shorten the delay of the TDD system due to transmission of the A/N signal.

In an embodiment, the downlink channel of the bidirectional subframe is configured for transmitting ACK/NACK information for uplink data in the uplink channel of the bidirectional subframe, as shown in FIG.5.

The embodiment of the present disclosure provides a simple transmission timing of an A/N signal, which can shorten the delay of the TDD system due to transmission of the A/N signal.

In an embodiment, the uplink control channel of the bidirectional subframe is configured for transmitting ACK/NACK information of downlink data in the downlink channel of the bidirectional subframe, as shown in FIG. 5.

The embodiment of the present disclosure provides a simple transmission timing of an A/N signal, which can shorten the delay of the TDD system due to transmission of the A/N signal.

On the basis of the above three types of subframes, three types of transition subframes may be introduced: a downlink transition subframe, an uplink transition subframe, and a bidirectional transition subframe.

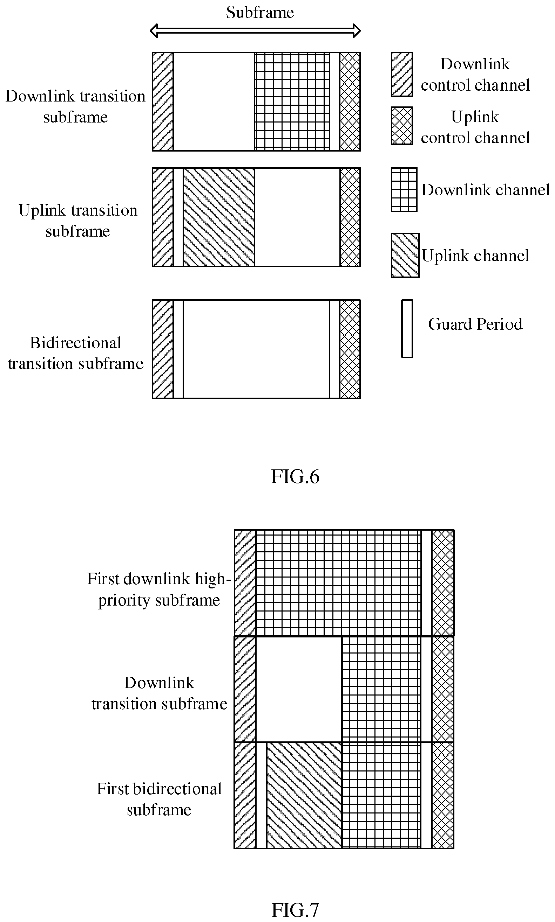

As shown in FIG. 6, the downlink transition subframe includes a downlink control channel, a guard period, a downlink channel, a guard period, and an uplink control channel in sequence in the time domain direction. The uplink transition subframe includes a downlink control channel, a guard period, an uplink channel, a guard period, and an uplink control channel in sequence in the time domain direction. The bidirectional transition subframe includes a downlink control channel, a guard period, and an uplink control channel in sequence in the time domain direction.

In some embodiments, a type of a transition subframe may be indicated in a downlink control channel at the beginning of the subframe.

The following describes how to combine the above three types of basic subframes and three types of transition subframes to achieve more flexible spectrum configuration of the system.

In some embodiments, the wireless communication system includes a first downlink high-priority subframe and a first bidirectional subframe. In the time domain direction, time domain positions of the first downlink high-priority subframe and the first bidirectional subframe are the same. In a frequency domain direction, a downlink transition subframe is set between the first downlink high-priority subframe and the first bidirectional subframe. The guard period of the downlink transition subframe separates the uplink channel of the first bidirectional subframe from the downlink channel of the first downlink high-priority subframe, as shown in FIG. 7.

Specifically, when a downlink high-priority subframe and a bidirectional subframe are to be deployed at the same time (in a subframe), a downlink transition subframe may be inserted between the two types of the subframes in the frequency domain. The guard period of the downlink transition subframe is used to separate the downlink channel of the downlink high-priority subframe from the uplink channel of the bidirectional subframe, in order to avoid a collision between the downlink channel of the downlink high-priority subframe and the uplink channel of the bidirectional subframe in adjacent frequency domain.

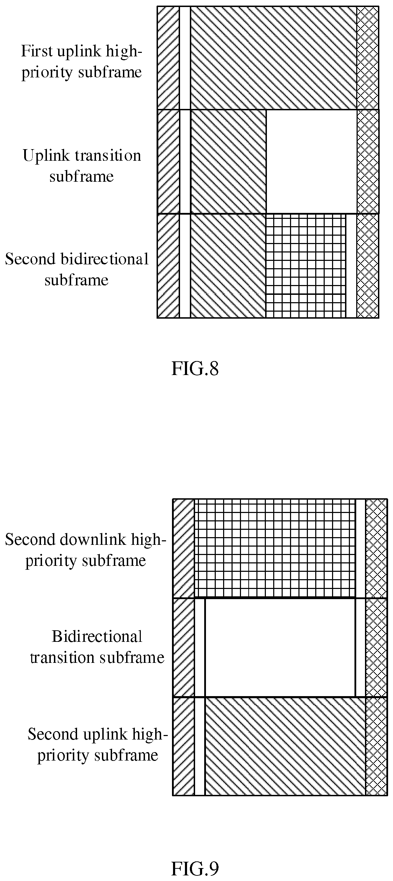

In some embodiments, the wireless communication system includes a first uplink high-priority subframe and a second bidirectional subframe. In the time domain direction, time domain positions of the first uplink high-priority subframe and the second bidirectional subframe are the same. In the frequency domain direction, an uplink transition subframe is set between the first uplink high-priority subframe and the second bidirectional subframe. The guard period of the uplink transition subframe separates the downlink channel of the second bidirectional subframe from the uplink channel of the first uplink high-priority subframe, as shown in FIG. 8.

Specifically, when an uplink high-priority subframe and a bidirectional subframe are to be deployed at the same time (in a subframe), an uplink transition subframe may be inserted between the two types of the subframes in the frequency domain. The guard period of the uplink transition subframe is used to separate the uplink channel of the uplink high-priority subframe from the downlink channel of the bidirectional subframe, in order to avoid a collision between the uplink channel of the uplink high-priority subframe and the downlink channel of the bidirectional subframe in adjacent frequency domains.

In some embodiments, the wireless communication system includes a second uplink high-priority subframe and a second downlink high-priority subframe. Here, in the time domain direction, time domain positions of the second uplink high-priority subframe and the second downlink high-priority subframe are the same. In the frequency domain direction, a bidirectional transition subframe is set between the second uplink high-priority subframe and the second downlink high-priority subframe. The guard period of the bidirectional transition subframe separates the uplink channel of the second uplink high-priority subframe from the downlink channel of the second downlink high-priority subframe.

Specifically, when an uplink high-priority subframe and a downlink high-priority subframe are to be deployed at the same time (in a subframe), a bidirectional transition subframe may be inserted between the two types of the subframes in the frequency domain. The guard period of the bidirectional transition subframe is used to separate the uplink channel of the uplink high-priority subframe from the downlink channel of the downlink high-priority subframe, in order to avoid a collision between the uplink channel of the uplink high-priority subframe and the downlink channel of the downlink high-priority subframe in adjacent frequency domains.

By introducing three types of transition subframes, structures of the three types of basic subframes can be more flexibly combined in the frequency.

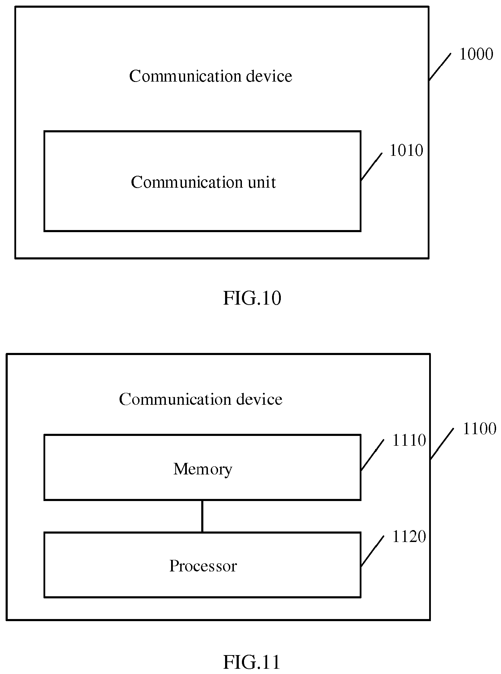

The wireless communication method according to the embodiments of the present disclosure is described above in detail with reference to FIG. 1 to FIG.9, and the following describes a communication device according to the embodiments of the present disclosure in detail with reference to FIG. 10 to FIG. 11. It should be understood that the communication device may be a base station or a terminal. The description on communication device side corresponds to the description on the method side. To avoid repetitions, detailed descriptions are omitted here.

FIG. 10 is a schematic structural diagram of a communication device according to an embodiment of the present disclosure. The communication device 1000 of FIG. 10 includes a communication unit 1010.

The communication unit 1010 is configured to: in a wireless communication system, communicate with other communication devices via a subframe, a subframe in the wireless communication system includes at least one of a downlink high-priority subframe, an uplink high-priority subframe, or a bidirectional subframe. Here, the downlink high-priority subframe includes a downlink control channel, a downlink channel, a guard period, and an uplink control channel in sequence in a time domain direction. The uplink high-priority subframe includes a downlink control channel, a guard period, an uplink channel, and an uplink control channel in sequence in the time domain direction. The bidirectional subframe includes a downlink control channel, a guard period, an uplink channel, a downlink channel, a guard period, and an uplink control channel in sequence in the time domain direction. Here, the downlink control channel is configured for transmitting downlink control information, and the uplink control channel is configured for transmitting uplink control information. The downlink channel is configured for transmitting at least one of downlink data or downlink control information, and the uplink channel is configured for transmitting at least one of uplink data or uplink control information.

In the embodiment of the present disclosure, the communication system introduces at least one of a downlink high-priority subframe, an uplink high-priority subframe or a bidirectional subframe, which increases types of information that can be carried in a subframe and makes the information transmission modes of the communication system more flexible.

Optionally, as an example, the uplink control channel of the downlink high-priority subframe is configured for transmitting ACK/NACK information for downlink data in the downlink channel of the downlink high-priority subframe.

Optionally, as an example, the downlink control channel of the uplink high-priority subframe is configured for transmitting ACK/NACK information for uplink data in a subframe previous to the uplink high-priority subframe.

Optionally, as an example, the downlink channel of the bidirectional subframe is configured for transmitting ACK/NACK information for uplink data in the uplink channel of the bidirectional subframe.

Optionally, as an example, the uplink control channel of the bidirectional subframe is configured for transmitting ACK/NACK information for downlink data in the downlink channel of the bidirectional subframe.

Optionally, as an example, the subframe in the wireless communication system further includes at least one of a downlink transition subframe, an uplink transition subframe, or a bidirectional subframe. Here, the downlink transition subframe includes a downlink control channel, a guard period, a downlink channel, a guard period, and an uplink control channel in sequence in the time domain direction. The uplink transition subframe includes a downlink control channel, a guard period, an uplink channel, a guard period, and an uplink control channel in sequence in the time domain direction. The bidirectional transition subframe includes a downlink control channel, a guard period, and an uplink control channel in sequence in the time domain direction.

Optionally, as an example, the wireless communication system includes a first downlink high-priority subframe and a first bidirectional subframe. Here, in the time domain direction, time domain positions of the first downlink high-priority subframe and the first bidirectional subframe are same. In a frequency domain direction, a downlink transition subframe is set between the first downlink high-priority subframe and the first bidirectional subframe. The guard period of the downlink transition subframe separates the uplink channel of the first bidirectional subframe from the downlink channel of the first downlink high-priority subframe.

Optionally, as an example, the wireless communication system includes a first uplink high-priority subframe and a second bidirectional subframe. In the time domain direction, time domain potions of the first uplink high-priority subframe and the second bidirectional subframe are the same. In the frequency domain direction, an uplink transition subframe is set between the first uplink high-priority subframe and the second bidirectional subframe. The guard period of the uplink transition subframe separates the downlink channel of the second bidirectional subframe from the uplink channel of the first uplink high-priority subframe.

Optionally, as an example, the wireless communication system includes a second uplink high-priority subframe and a second downlink high-priority subframe. In the time domain direction, time domain positions of the second uplink high-priority subframe and the second downlink high-priority subframe are the same. In the frequency domain direction, a bidirectional transition subframe is set between the second uplink high-priority subframe and the second downlink high-priority subframe. The guard period of the bidirectional subframe separates the uplink channel of the second uplink high-priority subframe from the downlink channel of the second downlink high-priority subframe.

Optionally, as an example, the downlink control channel of the bidirectional subframe includes ratio information of the uplink channel to the downlink channel of the bidirectional subframe.

Optionally, as an example, the downlink control channel of the subframe in the wireless communication system includes information for indicating a subframe type.

FIG. 11 is a schematic structural diagram of a communication device according to an embodiment of the present disclosure. The communication device 1100 of FIG. 11 includes a memory 1110 and a processor 1120.

The memory 1110 is configured for storing a program.

The processor 1120 is configured to execute the program in the memory 1110, and when the program is executed, the processor 1120 is configured to: in a wireless communication system, communicate with other communication devices via a subframe, a subframe in the wireless communication system includes at least one of a downlink high-priority subframe, an uplink high-priority subframe, or a bidirectional subframe. Here, the downlink high-priority subframe includes a downlink control channel, a downlink channel, a guard period, and an uplink control channel in sequence in a time domain direction. The uplink high-priority subframe includes a downlink control channel, a guard period, an uplink channel, and an uplink control channel in sequence in the time domain direction. The bidirectional subframe includes a downlink control channel, a guard period, an uplink channel, a downlink channel, a guard period, and an uplink control channel in sequence in the time domain direction. The downlink control channel is configured for transmitting downlink control information. The uplink control channel is configured for transmitting uplink control information. The downlink channel is configured for transmitting at least one of downlink data or downlink control information. The uplink channel is configured for transmitting at least one of uplink data or uplink control information.

In the embodiment of the present disclosure, the communication system introduces at least one of a downlink high-priority subframe, an uplink high-priority subframe or a bidirectional subframe, which increases types of information that can be carried in a subframe and makes the information transmission modes of the communication system more flexible.

Optionally, as an example, the uplink control channel of the downlink high-priority subframe is configured for transmitting ACK/NACK information for downlink data in the downlink channel of the downlink high-priority subframe.

Optionally, as an example, the downlink control channel of the uplink high-priority subframe is configured for transmitting ACK/NACK information for uplink data in a subframe previous to the uplink high-priority subframe.

Optionally, as an example, the downlink channel of the bidirectional subframe is configured for transmitting ACK/NACK information for uplink data in the uplink channel of the bidirectional subframe.

Optionally, as an example, the uplink control channel of the bidirectional subframe is configured for transmitting ACK/NACK information for downlink data in the downlink channel of the bidirectional subframe.

Optionally, as an example, the subframe in the wireless communication system further includes at least one of a downlink transition subframe, an uplink transition subframe, or a bidirectional subframe. The downlink transition subframe includes a downlink control channel, a guard period, a downlink channel, a guard period, and an uplink control channel in sequence in the time domain direction. The uplink transition subframe includes a downlink control channel, a guard period, an uplink channel, a guard period, and an uplink control channel in sequence in the time domain direction. The bidirectional transition subframe includes a downlink control channel, a guard period, and an uplink control channel in sequence in the time domain direction.

Optionally, as an example, the wireless communication system includes a first downlink high-priority subframe and a first bidirectional subframe. Here, in the time domain direction, time domain positions of the first downlink high-priority subframe and the first bidirectional subframe are same. In a frequency domain direction, a downlink transition subframe is set between the first downlink high-priority subframe and the first bidirectional subframe. The guard period of the downlink transition subframe separates the uplink channel of the first bidirectional subframe from the downlink channel of the first downlink high-priority subframe.

Optionally, as an example, the wireless communication system includes a first uplink high-priority subframe and a second bidirectional subframe. Here, in the time domain direction, time domain potions of the first uplink high-priority subframe and the second bidirectional subframe are the same. In the frequency domain direction, an uplink transition subframe is set between the first uplink high-priority subframe and the second bidirectional subframe. The guard period of the uplink transition subframe separates the downlink channel of the second bidirectional subframe from the uplink channel of the first uplink high-priority subframe.

Optionally, as an example, the wireless communication system includes a second uplink high-priority subframe and a second downlink high-priority subframe, In the time domain direction, time domain positions of the second uplink high-priority subframe and the second downlink high-priority subframe are the same. In the frequency domain direction, a bidirectional transition subframe is set between the second uplink high-priority subframe and the second downlink high-priority subframe. The guard period of the bidirectional subframe separates the uplink channel of the second uplink high-priority subframe from the downlink channel of the second downlink high-priority subframe.

Optionally, as an example, the downlink control channel of the bidirectional subframe includes ratio information of the uplink channel to the downlink channel of the bidirectional subframe.

Optionally, as an example, the downlink control channel of the subframe in the wireless communication system includes information for indicating a subframe type.

Those of ordinary skill in the art may be aware that the exemplary units and algorithm steps described in conjunction with the embodiments disclosed herein can be implemented by electronic hardware or a combination of computer software and electronic hardware. Whether these functions are implemented in hardware or software depends on the specific application and design constraint conditions of the technical solution. A person skilled in the art may use different methods to implement the described functions for each specific application, but it should not be considered that the implementation goes beyond the scope of the present disclosure.

Those skilled in the art can clearly understand that for the convenience and conciseness of the description, specific working processes of the systems, devices, and units described above may refer to corresponding processes in the foregoing method embodiments, and details are not described herein again.

In the several embodiments provided herein, it should be understood that the disclosed systems, devices, and methods may be implemented in other ways. For example, the device embodiments described above are merely illustrative. For example, the division of the units is only a logical function division, and there may be other division manners in actual implementation. For example, multiple units or components may be combined or can be integrated into another system, or some features can be ignored or not be performed. In addition, the illustrated or discussed mutual coupling or direct coupling or communication connection may be indirect coupling or communication connection through some interfaces, devices or units, and may be electrical, mechanical or other forms.

The units described as separate parts may or may not be physically separated. The components displayed as units may or may not be physical units, that is, may be located in one place, or may be distributed on multiple network units. Some or all of the units may be selected according to actual needs to achieve the purpose of the solution of the embodiments.

In addition, various functional units in each embodiment of the present disclosure may be integrated in one processing unit, or each unit may exist alone physically, or two or more units may be integrated in one unit.

The functions, if implemented in the form of software functional units and sold or used as a stand-alone product, may be stored in a computer-readable storage medium. Based on this understanding, the essence of the technical solution of the present disclosure or a part that contributes to the prior art or part of the technical solution may be embodied in the form of a software product. The computer software product is stored in a storage medium and includes instructions to enable a computer device (which may be a personal computer, a server, or a network device, etc.) to perform all or part of the steps of the methods described in the each embodiment of the present disclosure. The foregoing storage medium includes: a U disk, a removable hard disk, a Read-only memory (ROM), a Random Access Memory (RAM), a magnetic disk, an optical disk, or any other medium that can store program codes.

The descriptions above are only specific implementation manners of the present disclosure. The present disclosure is not limited to the embodiments described here, and those skilled in the art will appreciate that various changes or substitutions may be made without departing from the scope of the protection of the present disclosure. Therefore, the protection scope of the present disclosure is to be construed in accordance with the substance defined by the claims.

## Claims

1. A wireless communication method,
in a wireless communication system, a communication device communicates with other communication devices via a subframe, said subframe in the wireless communication system comprises a bidirectional subframe;
**characterised in that** the bidirectional subframe comprises, in the time domain direction, a downlink control channel, a guard period, an uplink channel, a downlink channel, a guard period, and an uplink control channel in sequence;
wherein the downlink control channel is configured for transmitting downlink control information, the uplink control channel is configured for transmitting uplink control information, the downlink channel is configured for transmitting at least one of downlink data or downlink control information, and the uplink channel is configured for transmitting at least one of uplink data or uplink control information.

2. The method as claimed in claim 1, wherein the downlink channel of the bidirectional subframe is configured for transmitting ACK/NACK information for uplink data in the uplink channel of the bidirectional subframe.

3. The method as claimed in any of claims 1 to 2, wherein the uplink control channel of the bidirectional subframe is configured for transmitting ACK/NACK information for downlink data in the downlink channel of the bidirectional subframe.

4. The method as claimed in any of claims 1 to 3, wherein the wireless communication system further comprises at least one of a downlink transition subframe, an uplink transition subframe, or a bidirectional transition subframe;
wherein the downlink transition subframe comprises, in the time domain direction, a downlink control channel, a guard period, a downlink channel, a guard period, and an uplink control channel in sequence;
the uplink transition subframe comprises, in the time domain direction, a downlink control channel, a guard period, an uplink channel, a guard period, and an uplink control channel in sequence; and
the bidirectional transition subframe comprises, in the time domain direction, a downlink control channel, a guard period, and an uplink control channel in sequence.

5. The method as claimed in claim 4, wherein the wireless communication systerr further comprises a first downlink high-priority subframe and a first bidirectional subframe, wherein in the time domain direction, time domain positions of the first downlink high-priority subframe and the first bidirectional subframe are the same; in a frequency domain direction, a downlink transition subframe is set between the first downlink high-priority subframe and the first bidirectional subframe, and the guard period of the downlink transition subframe separates the uplink channel of the first bidirectional subframe from the downlink channel of the first downlink high-priority subframe.

6. The method as claimed in claim 4 or 5, wherein the wireless communication systerr further comprises a first uplink high-priority subframe and a second bidirectional subframe, wherein in the time domain direction, time domain positions of the first uplink high-priority subframe and the second bidirectional subframe are the same; in a frequency domain direction, an uplink transition subframe is set between the first uplink high-priority subframe and the second bidirectional subframe, and the guard period of the uplink transition subframe separates the downlink channel of the second bidirectional subframe from the uplink channel of the first uplink high-priority subframe.

7. The method as claimed in any of claims 4 to 6, wherein the wireless communication system further comprises a second uplink high-priority subframe and a second downlink high-priority subframe, wherein in the time domain direction, time domain positions of the second uplink high-priority subframe and the second downlink high-priority subframe are the same; in a frequency domain direction, a bidirectional transition subframe is set between the second uplink high-priority subframe and the second downlink high-priority subframe, and the guard period of the bidirectional transition subframe separates the uplink channel of the second uplink high-priority subframe from the downlink channel of the second downlink high-priority subframe.

8. The method as claimed in any of claims 1 to 7, wherein the downlink control channel of the bidirectional subframe comprises ratio information of the uplink channel to the downlink channel of the bidirectional subframe.

9. The method as claimed in any of claims 1 to 7, wherein the downlink control channel of the subframe in the wireless communication system comprises information for indicating a subframe type.

10. A communication device (1100), **characterized by** comprising:
a memory (1110) having storing thereon a program and a processor (1120) for executing the program to perform the method as claimed in any of claims 1-9.

11. A computer readable storage medium having stored thereon a program that when executed by a communication device, causes the communication device to perform the method as claimed in any of claims 1-9.

## Patentansprüche

1. Drahtloskommunikationsverfahren, bei dem in einem Drahtloskommunikationssystem eine Kommunikationsvorrichtung mit anderen Kommunikationsvorrichtungen über einen Unterrahmen kommuniziert, wobei der Unterrahmen in dem Drahtloskommunikationssystem einen bidirektionalen Unterrahmen umfasst;
**dadurch gekennzeichnet dass**
der bidirektionale Unterrahmen in Richtung des Zeitbereichs einen Downlink-Steuerkanal, eine Schutzperiode, einen Uplink-Kanal, einen Downlink-Kanal, eine Schutzperiode und einen Uplink-Steuerkanal in Folge umfasst;
wobei der Downlink-Steuerkanal zum Übertragen von Downlink-Steuerinformationen ausgelegt ist, der Uplink-Steuerkanal zum Übertragen von Uplink-Steuerinformationen ausgelegt ist; der Downlink-Kanal zum Übertragen von Downlink-Daten und/oder Downlink-Steuerinformationen ausgelegt ist und der Uplink-Kanal zum Übertragen von Uplink-Daten und/oder Uplink-Steuerinformationen ausgelegt ist.

2. Verfahren nach Anspruch 1, wobei der Downlink-Kanal des bidirektionalen Unterrahmens zur Übertragung von ACK/NACK-Informationen für Uplink-Daten im Uplink-Kanal des bidirektionalen Unterrahmens ausgelegt ist.

3. Verfahren nach einem der Ansprüche 1 bis 2, wobei der Uplink-Steuerkanal des bidirektionalen Unterrahmens zur Übertragung von ACK/NACK-Informationen für Downlink-Daten im Downlink-Kanal des bidirektionalen Unterrahmens ausgelegt ist.

4. Verfahren nach einem der Ansprüche 1 bis 3, wobei das Drahtloskommunikationssystem ferner einen Downlink-Übergangsunterrahmen und/oder einen Uplink-Übergangsunterrahmen und/oder einen bidirektionalen Übergangsunterrahmen umfasst;
wobei der Downlink-Übergangsunterrahmen in Richtung des Zeitbereichs einen Downlink-Steuerkanal, eine Schutzperiode, einen Downlink-Kanal, eine Schutzperiode und einen Uplink-Steuerkanal in Folge umfasst;
der Uplink Übergangsunterrahmen in Richtung des Zeitbereichs einen Downlink-Steuerkanal, eine Schutzperiode, einen Uplink-Kanal, eine Schutzperiode und einen Uplink-Steuerkanal in Folge umfasst; und
der bidirektionale Übergangsunterrahmen in Richtung des Zeitbereichs einen Downlink-Steuerkanal, eine Schutzperiode und einen Uplink-Steuerkanal in Folge umfasst.

5. Verfahren nach Anspruch 4, wobei das Drahtloskommunikationssystem ferner einen ersten Downlink-Hochprioritätsunterrahmen und einen ersten bidirektionalen Unterrahmen umfasst, wobei in der Richtung des Zeitbereichs die Zeitbereichspositionen des ersten Downlink-Hochprioritätsunterrahmens und des ersten bidirektionalen Unterrahmens die gleichen sind; in einer Richtung des Frequenzbereichs ein Downlink-Übergangsunterrahmen zwischen dem ersten Downlink-Hochprioritätsunterrahmen und dem ersten bidirektionalen Unterrahmen eingestellt ist, und die Schutzperiode des Downlink-Übergangsunterrahmens den Uplink-Kanal des ersten bidirektionalen Unterrahmens von dem Downlink-Kanal des ersten Downlink-Hochprioritätsunterrahmens trennt.

6. Verfahren nach Anspruch 4 oder 5, wobei das Drahtloskommunikationssystem ferner einen ersten Uplink-Hochprioritätsunterrahmen und einen zweiten bidirektionalen Unterrahmen umfasst, wobei in der Richtung des Zeitbereichs die Zeitbereichspositionen des ersten Uplink-Hochprioritätsunterrahmens und des zweiten bidirektionalen Unterrahmens die gleichen sind; in einer Richtung des Frequenzbereichs ein Downlink-Übergangsunterrahmen zwischen dem ersten Uplink-Hochprioritätsunterrahmen und dem zweiten bidirektionalen Unterrahmen eingestellt ist, und die Schutzperiode des Uplink-Übergangsunterrahmens den Downlink-Kanal des zweiten bidirektionalen Unterrahmens von dem Uplink-Kanal des ersten Uplink-Hochprioritätsunterrahmens trennt.

7. Verfahren nach einem der Ansprüche 4 bis 6, wobei das Drahtloskommunikationssystem ferner einen zweiten Uplink-Hochprioritätsunterrahmen und einen zweiten Downlink-Hochprioritätsunterrahmen umfasst, wobei in der Richtung des Zeitbereichs die Zeitbereichspositionen des zweiten Uplink-Hochprioritätsunterrahmens und des zweiten Downlink-Hochprioritätsunterrahmens die gleichen sind; in einer Richtung des Frequenzbereichs ein bidirektionaler Übergangsunterrahmen zwischen dem zweiten Uplink-Hochprioritätsunterrahmen und dem zweiten Downlink-Hochprioritätsunterrahmen eingestellt ist, und die Schutzperiode des bidirektionalen Übergangsunterrahmens den Uplink-Kanal des zweiten Uplink-Hochprioritätsunterrahmens von dem Downlink-Kanal des zweiten Downlink-Hochprioritätsunterrahmens trennt.

8. Verfahren nach einem der Ansprüche 1 bis 7, wobei der Downlink-Steuerungskanal des bidirektionalen Unterrahmens Verhältnisinformationen des Uplink-Kanals zu dem Downlink-Kanal des bidirektionalen Unterrahmens umfasst.

9. Verfahren nach einem der Ansprüche 1 bis 7, wobei der Downlink-Steuerkanal des Unterrahmens in dem Drahtloskommunikationssystem Informationen zur Angabe eines Unterrahmentyps umfasst.

10. Kommunikationsvorrichtung (1100), **dadurch gekennzeichnet, dass** sie umfasst:
einen Speicher (1110) mit einem darauf gespeicherten Programm, und einen Prozessor (1120) zum Ausführen des Programms, um das Verfahren nach einem der Ansprüche 1-9 durchzuführen.

11. Computerlesbares Speichermedium mit einem darauf gespeicherten Programm, das, wenn es von einer Kommunikationsvorrichtung ausgeführt wird, die Kommunikationsvorrichtung veranlasst, das Verfahren nach einem der Ansprüche 1-9 durchzuführen.

## Revendications

1. Procédé de communication sans fil,
dans un système de communication sans fil, un dispositif de communication communique avec d'autres dispositifs de communication par l'intermédiaire d'une sous-trame, ladite sous-trame dans le système de communication sans fil comprenant une sous-trame bidirectionnelle ;
**caractérisé en ce que**
la sous-trame bidirectionnelle comprend, dans le sens du domaine temporel, un canal de commande de liaison descendante, une période de garde, un canal de liaison montante, un canal de liaison descendante, une période de garde, et un canal de commande de liaison montante en séquence ;
dans lequel le canal de commande de liaison descendante est configuré pour transmettre des informations de commande de liaison descendante, le canal de commande de liaison montante est configuré pour transmettre des informations de commande de liaison montante, le canal de liaison descendante est configuré pour transmettre au moins un élément parmi des données de liaison descendante ou des informations de commande de liaison descendante, et le canal de liaison montante est configuré pour transmettre au moins un élément parmi des données de liaison montante ou des informations de commande de liaison montante.

2. Procédé tel que revendiqué dans la revendication 1, dans lequel le canal de liaison descendante de la sous-trame bidirectionnelle est configuré pour transmettre des informations ACK/NACK pour des données de liaison montante dans le canal de liaison montante de la sous-trame bidirectionnelle.

3. Procédé tel que revendiqué dans n'importe laquelle des revendications 1 à 2, dans lequel le canal de commande de liaison montante de la sous-trame bidirectionnelle est configuré pour transmettre des informations ACK/NACK pour des données de liaison descendante dans le canal de liaison descendante de la sous-trame bidirectionnelle.

4. Procédé tel que revendiqué dans n'importe laquelle des revendications 1 à 3, dans lequel le système de communication sans fil comprend en outre au moins une sous-trame parmi une sous-trame de transition de liaison descendante, une sous-trame de transition de liaison montante, ou une sous-trame de transition bidirectionnelle ;
dans lequel la sous-trame de transition de liaison descendante comprend, dans le sens du domaine temporel, un canal de commande de liaison descendante, une période de garde, un canal de liaison descendante, une période de garde, et un canal de commande de liaison montante en séquence ;
la sous-trame de transition de liaison montante comprend, dans le sens du domaine temporel, un canal de commande de liaison descendante, une période de garde, un canal de liaison montante, une période de garde, et un canal de commande de liaison montante en séquence ; et
la sous-trame de transition bidirectionnelle comprend, dans le sens du domaine temporel, un canal de commande de liaison descendante, une période de garde, et un canal de commande de liaison montante en séquence.

5. Procédé tel que revendiqué dans la revendication 4, dans lequel le système de communication sans fil comprend en outre une première sous-trame de haute priorité de liaison descendante et une première sous-trame bidirectionnelle, dans lequel dans le sens du domaine temporel, des positions du domaine temporel de la première sous-trame de haute priorité de liaison descendante et de la première sous-trame bidirectionnelle sont les mêmes ; dans un sens du domaine fréquenciel, une sous-trame de transition de liaison descendante est définie entre la première sous-trame de haute priorité de liaison descendante et la première sous-trame bidirectionnelle, et la période de garde de la sous-trame de transition de liaison descendante sépare le canal de liaison montante de la première sous-trame bidirectionnelle par rapport au canal de liaison descendante de la première sous-trame de haute priorité de liaison descendante.

6. Procédé tel que revendiqué dans la revendication 4 ou 5, dans lequel le système de communication sans fil comprend en outre une première sous-trame de haute priorité de liaison montante et une deuxième sous-trame bidirectionnelle, dans lequel dans le sens du domaine temporel, des positions du domaine temporel de la première sous-trame de haute priorité de liaison montante et de la deuxième sous-trame bidirectionnelle sont les mêmes ; dans un sens du domaine fréquenciel, une sous-trame de transition de liaison montante est définie entre la première sous-trame de haute priorité de liaison montante et la deuxième sous-trame bidirectionnelle, et la période de garde de la sous-trame de transition de liaison montante sépare le canal de liaison descendante de la deuxième sous-trame bidirectionnelle par rapport au canal de liaison montante de la première sous-trame de haute priorité de liaison montante.

7. Procédé tel que revendiqué dans n'importe laquelle des revendications 4 à 6, dans lequel le système de communication sans fil comprend en outre une deuxième sous-trame de haute priorité de liaison montante et une deuxième sous-trame de haute priorité de liaison descendante, dans lequel dans le sens du domaine temporel, des positions du domaine temporel de la deuxième sous-trame de haute priorité de liaison montante et de la deuxième sous-trame de haute priorité de liaison descendante sont les mêmes ; dans un sens du domaine fréquenciel, une sous-trame de transition bidirectionnelle est définie entre la deuxième sous-trame de haute priorité de liaison montante et la deuxième sous-trame de haute priorité de liaison descendante, et la période de garde de la sous-trame de transition bidirectionnelle sépare le canal de liaison montante de la deuxième sous-trame de haute priorité de liaison montante par rapport au canal de liaison descendante de la deuxième sous-trame de haute priorité de liaison descendante.

8. Procédé tel que revendiqué dans n'importe laquelle des revendications 1 à 7, dans lequel le canal de commande de liaison descendante de la sous-trame bidirectionnelle comprend des informations de rapport du canal de liaison montante au canal de liaison descendante de la sous-trame bidirectionnelle.

9. Procédé tel que revendiqué dans n'importe laquelle des revendications 1 à 7, dans lequel le canal de commande de liaison descendante de la sous-trame dans le système de communication sans fil comprend des informations pour indiquer un type de sous-trame.

10. Dispositif de communication (1100), **caractérisé par le fait qu'**il comprend :
une mémoire (1110) sur laquelle est stocké un programme et un processeur (1120) pour exécuter le programme afin de réaliser le procédé tel que revendiqué dans n'importe laquelle des revendications 1-9.

11. Support de stockage lisible par ordinateur sur lequel est stocké un programme qui lorsqu'il est exécuté par un dispositif de communication, amène le dispositif de communication à réaliser le procédé tel que revendiqué dans n'importe laquelle des revendications 1-9.
